# EUROPÄISCHE PATENTSCHRIFT

(11) **EP 3 582 351 B1**
(45) Veröffentlichungstag und Bekanntmachung des Hinweises auf die Patenterteilung: **07.06.2023**
(21) Anmeldenummer: 19183169.2
(22) Anmeldetag: 23.08.2017
(51) Int. Cl.: H02G 3/22, F16L 5/14

(54) **VERWENDUNG EINER GEBÄUDEWANDEINFÜHRUNG ZUM EINBAU IN EINE GEBÄUDEWAND**
USE OF A WALL FEED-THROUGH FOR INSTALLATION IN A WALL
UTILISATION D'UNE ENTRÉE DE MUR DE BÂTIMENT DESTINÉE À ÊTRE INSTALLÉE DANS UN MUR DE BÂTIMENT

(30) Priorität: 24.08.2016 DE 102016010096
(43) Veröffentlichungstag der Anmeldung: 18.12.2019
(62) Teilanmeldung aus: 17020380.6
(73) Patentinhaber: Hauff-Technik GmbH & Co. KG, 89568 Hermaringen (DE)
(72) Erfinder: SCHEURING, Horst, 89542 Herbrechtingen (DE); KURZ, Ralf, 89537 Giengen (DE)
(74) Vertreter: König Szynka Tilmann von Renesse Patentanwälte Partnerschaft mbB München

(56) Entgegenhaltungen:
- EP-A1- 0 757 142
- EP-A1- 0 902 225
- EP-A1- 1 635 100
- DE-A1- 10 346 463
- DE-A1- 19 949 134
- DE-U1-202015 001 458

## Beschreibung

Die vorliegende Erfindung betrifft die Verwendung einer Gebäudeeinführung zum Einbau in eine Außenwand eines Gebäudes durch Vergießen mit zunächst fließfähigem und dann erstarrendem Vergussmaterial.

Aus dem Stand der Technik sind Einführungen zum Vergießen bekannt, nämlich in der Regel zum Einbetonieren in eine Wand. Eine solche Einführung weist ein Rohrelement auf, das in dem Beton eine Durchgangsöffnung zwischen den beiden Wandseiten frei hält. Ferner ist es bekannt, ein solches Rohrelement endseitig mit einer Flanschplatte auszustatten, die dann während des Vergießens flächig an der Schalung anliegt. In axialer Richtung des Rohrelements gesehen haben derartige Flanschplatten meist eine quadratische Außenkontur, an ihren Außenkanten sind dabei Formschlusselemente angeordnet, die dem Verbinden mehrerer Rohrelemente bzw. Einführungen zu einem Modul dienen.

Zur Illustration wird verwiesen auf die EP 2 338 658 A1, die eine solche Einführung für Kabel zeigt. Zum Einführen mehrerer Kabel wird eine Mehrzahl dieser Einführungen bzw. Rohrelemente zu einem Modul zusammengebaut und wird dieses einbetoniert, sodass dann jedes der Rohrelemente eine eigene Durchgangsöffnung in dem Beton frei hält.

Die EP 0 902 225 A1 zeigt eine Durchführung mit einem Futterrohr, in dem eine Flanschplatte angeordnet ist. Diese bildet dann später gemeinsam mit einem Dichtkörper und einer weiteren Flanschplatte eine Pressdichtung.

Die EP 0 757 142 A1 zeigt einen Installationsdurchbruch mit mehreren Hülsen, die gemeinsam in eine Wand eingegossen werden und jeweils eine Durchgangsöffnung zum Hindurchfädeln einer Leitung freihalten.

Die EP 1 635 100 A1 zeigt eine Durchführung mit einem Dichtkörper und einer darin eingesetzten Stützhülse, die nach dem Hindurchfädeln einer Leitung herausgezogen wird, sodass sich der Dichtkörper an die Leitung anlegt.

Der vorliegenden Erfindung liegt die Aufgabe zugrunde, eine vorteilhafte Verwendung anzugeben.

Erfindungsgemäß wird diese Aufgabe mit der Verwendung nach Anspruch 1 gelöst.

Bevorzugte Ausführungsformen finden sich in den abhängigen Ansprüchen und der gesamten Offenbarung, wobei in der Darstellung nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

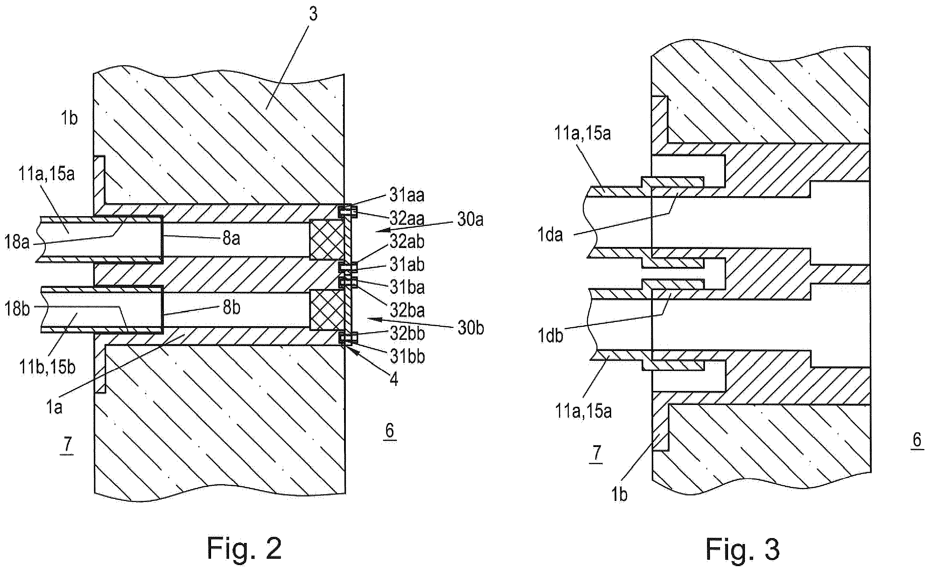

Erfindungsgemäß wird das Schutzrohr selbst direkt an die Durchlassöffnung gesetzt, siehe ebenfalls unten im Detail (sowie Figur 2, 3, zur Illustration). In den Schutzrohren, die gebäudeaußenseitig bevorzugt im Erdreich verlegt sind, verlaufen dann die eigentlichen Leitungen zum Gebäude hin. Typischerweise werden zunächst die Schutzrohre in einem sich zu dem Gebäude erstreckenden Graben verlegt und an die Gebäudeeinführung angeschlossen, wobei die eigentlichen Leitungen dann in der Regel erst nach dem Auffüllen, also Zuschütten des Grabens, durch die Schutzrohre geführt, gewissermaßen gefädelt werden (von der Gebäude- oder Straßenanschlussseite her). Jedes der Schutzrohre liegt bevorzugt für sich im Erdreich, an jedes der Schutzrohre grenzt das Erdreich dann also direkt (an die jeweilige Außenmantelfläche).

Vorliegend wird nun in einfachen Worten nicht jedem Schutzrohr seine eigene Durchgangsöffnung in der Gebäudewand zugeordnet, sondern werden über das Unterteilungselement mehrere Schutzrohre in einer gemeinsamen Durchgangsöff nung zusammengefasst. Nach dem Stand der Technik wird hingegen im Falle mehrerer Schutzrohre jedes davon einem eigenen Rohrelement des Moduls und entsprechend einer eigenen Durchgangsöffnung in der Wand zugeordnet. Zwischen den einzelnen Durchgangsöffnungen müssen dabei gewisse Mindestabstände eingehalten werden, damit das Vergussmaterial (der Beton) dazwischen noch eine hinreichende Stärke hat bzw. auch überhaupt zuverlässig in diese Zwischenräume gelangt. Eine lückenhafte Auffüllung mit Beton dazwischen könnte die Ausbildung von Kriechpfaden und Wasseransammlungen bzw. schlimmstenfalls einen Feuchteeintritt in das Gebäude bedingen. Dementsprechend müssen also bei einem eingangs beschriebenen Modul die Rohrelemente der Einführungen einen gewissen Mindestabstand zueinander haben, der durch die Größe der zugeordneten Flanschplatten definiert wird, vgl. die EP 2 338 658 A1 im Detail.

Bei dem vorliegenden Konzept muss die eine Durchgangsöffnung, der dann mehrere Schutzrohre zugeordnet sind, zwar gegebenenfalls etwas größer gefasst werden, was eine erhöhte Belastung beim Vergießen/Einbetonieren erwarten lässt. Da aber dann innerhalb der Durchgangsöffnung keine im Vergleich zum Stand der Technik maßgeblichen Mindestabstände zwischen den Leerrohren eingehalten werden müssen, lässt sich eine in der Gesamtschau kompaktere Anordnung erreichen. Es lässt sich also der Wandflächenanteil, der für das Hindurchführen der Leitungen benötigt wird, verringern, was gebäudeinnenseitig bspw. auch architektonisch Vorteile bieten kann. Zudem können sich die Schutzrohre gebäudeaußenseitig eng gebündelt bis an die Außenwand (auch nur "Wand") erstrecken, kann also der Graben entsprechend schmal und der Aufwand bei Erdbauarbeiten verringert sein.

Das "Begrenztsein" der Durchgangsöffnung von dem erstarrten Vergussmaterial bezieht sich auf die Richtungen senkrecht zur Durchgangsöffnungs-Längsachse. In zu dieser Längsachse senkrechten Schnittebenen betrachtet hat die Durchgangsöffnung eine zusammenhängende Fläche, jedenfalls über mindestens 30 %, 50 %, 70 % bzw. 90 % ihrer axialen Erstreckung ("Länge"), bevorzugt über die gesamte (100 %). Besagte axiale Erstreckung wird entlang der Durchgangsöffnungs-Längsachse genommen, und zwar von dem Schnittpunkt dieser Längsachse mit einer eine Wandseitenfläche beinhaltenden Ebene bis zum Schnittpunkt der Längsachse mit einer die entgegengesetzte Wandseitenfläche beinhaltenden Ebene. Die eine Wandseitenfläche ist der Gebäudeinnenseite und die entgegengesetzte der Gebäudeaußenseite zugewandt. Das erstarrte Vergussmaterial bildet die Mantelfläche der Durchgangsöffnung, besagte Mantelfläche ist zu der Durchgangsöffnungs-Längsachse bevorzugt dreh-, besonders bevorzugt rotationssymmetrisch, jedenfalls über eine den eben offenbarten Prozentwerten entsprechende axiale Erstreckung, bevorzugt über die gesamte.

In zur Durchgangsöffnungs-Längsachse senkrechten Schnittebenen betrachtet kann die Durchgangsöffnung im Allgemeinen bspw. auch eine polygon-, insbesondere rechteckförmige Querschnittsfläche haben (gegebenenfalls mit abgerundeten Ecken), bevorzugt ist eine runde, insbesondere kreisrunde, Form, jeweils zumindest über eine axiale Erstreckung nach Maßgabe der im vorherigen Absatz offenbarten Prozentwerte. Die Bezugnahme auf einen "Durchmesser" muss im Rahmen dieser Offenbarung nicht notwendigerweise eine Kreisform implizieren, sondern ist im Allgemeinen auf den Mittelwert aus kleinster und größter Erstreckung zu lesen, der im Falle der bevorzugten Kreisform dem Kreisdurchmesser entspricht. Die Durchgangsöffnung kann bevorzugt einen (senkrecht zu ihrer Längsachse genommenen) Durchmesser von mindestens 150 mm, weiter und besonders bevorzugt mindestens 170 mm bzw. 190 mm, haben (jedenfalls über eine axiale Erstreckung entsprechend der Prozentwerte des vorstehendes Absatzes); mögliche Obergrenzen können bspw. bei höchstens 300 mm, 280 mm, 260 mm bzw. 240 mm liegen (in der Reihenfolge der Nennung zunehmend bevorzugt), wobei Ober- und Untergrenze im Allgemeinen auch unabhängig voneinander von Interesse sein können.

Die Leerrohre können bspw. jeweils einen Innendurchmesser von mindestens 55 mm, 60 mm, 65 mm bzw. 70 mm haben, wobei mögliche Obergrenzen (davon unabhängig) bspw. bei höchstens bei 90 mm, 85 mm, 80 mm bzw. 75 mm liegen können (jeweils in der Reihenfolge der Nennung zunehmend bevorzugt), dabei Ober- und Untergrenze im Allgemeinen aber auch unabhängig voneinander von Interesse sein können. Der Außendurchmesser eines jeweiligen Leerrohrs kann bspw. mindestens 60 mm, 65 mm, 70 mm bzw. 75 mm betragen, wobei mögliche Obergrenzen (davon unabhängig) bspw. bei höchstens 110 mm, 100 mm, 90 mm, 85 mm bzw. 80 mm liegen können (jeweils in der Reihenfolge der Nennung zunehmend bevorzugt). Die Leerrohre werden an die Durchlassöffnungen "angesetzt", was im Allgemeinen auch auf ein Anschließen Stoß-an-Stoß zu lesen sein kann, bevorzugt aber ein Auf- oder Einschieben des jeweiligen Leerrohrs meint. Insbesondere im Falle der Schutzrohre ist, soweit von einem Ein- oder Aufschieben die Rede ist, im Allgemeinen auch eine Kombination daraus denkbar, etwa im Falle eines endseitig doppelwandigen, also mit U-förmigem Wandprofil vorgesehenen Rohres; soweit also von der einen Variante die Rede ist, muss dies die andere im Allgemeinen nicht ausschließen, wenngleich dies bevorzugt ist (also im Falle des Einschiebens nicht aufgeschoben wird, und umgekehrt).

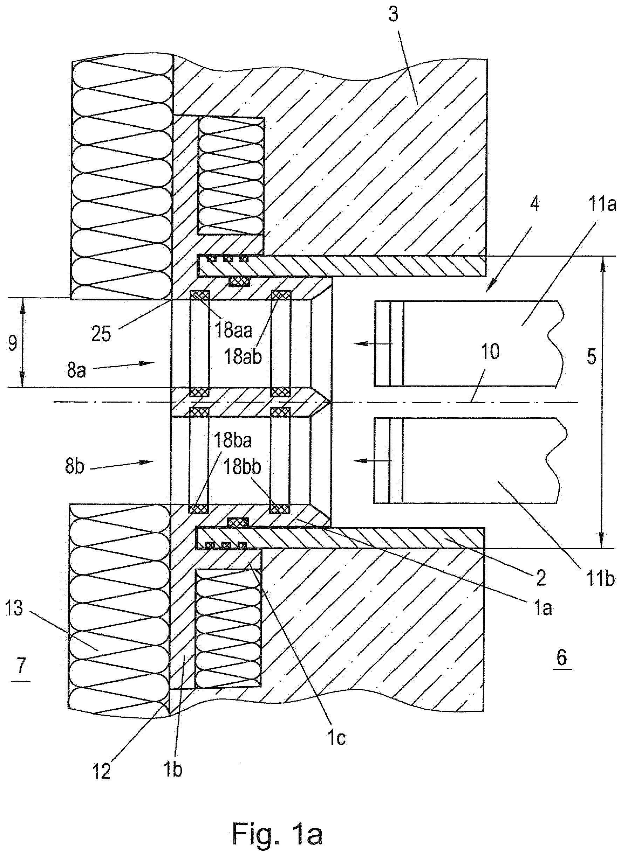

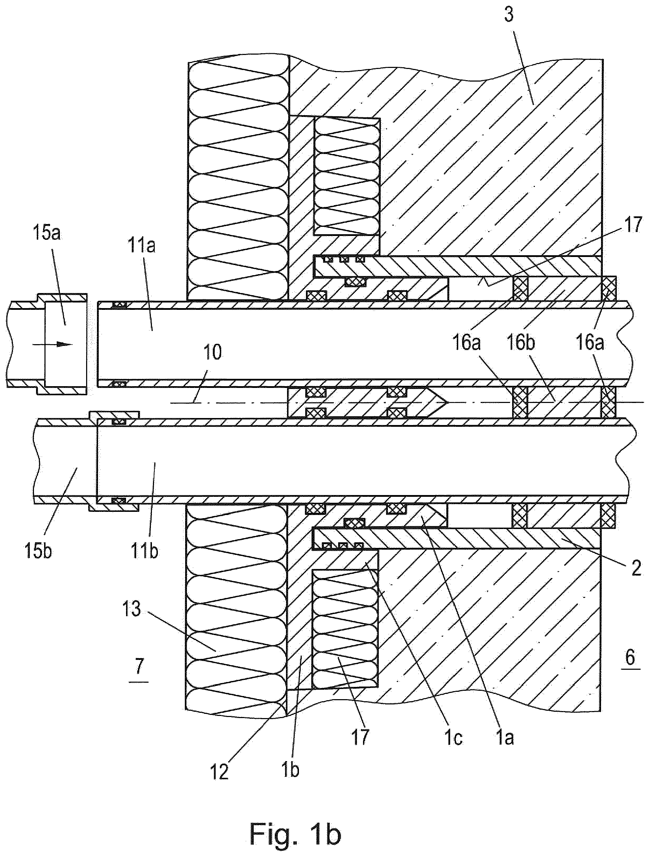

Wie nachstehend noch im Einzelnen deutlich wird, kann das Unterteilungselement selbst die Durchgangsöffnung in dem Vergussmaterial frei halten (vgl. Fig. 2 zur Illustration) oder kann es auch mit einem Futterrohr zusammengesetzt sein, und in diesem Fall bspw. nur einen axialen Abschnitt der Durchgangsöffnung frei halten (vgl. Fig. 1a, b zur Illustration). Unabhängig davon im Einzelnen ist das Unterteilungselement bevorzugt derart ausgebildet, dass es nach dem Vergießen nicht zerstörungsfrei, also nicht ohne zumindest teilweise Zerstörung des Unterteilungselements selbst oder eines gemeinsam damit vergossenen Teils (insbesondere Futterrohrs), aus der Durchgangsöffnung genommen werden kann. Umgekehrt ist es also sicher an seinem Platz in der Durchgangsöffnung gehalten, was das Ansetzen der Leerrohre vereinfacht und insbesondere bei beengten Montageverhältnissen Vorteile bieten kann. Deshalb wird das Unterteilungselement auch mit vergossen und bspw. nicht nachträglich in ein zuvor einbetoniertes Futterrohr gesetzt (dies wäre ein Arbeitsschritt mehr, logistisch aufwendiger und gegebenenfalls auch fehlerträchtiger, weil beim nachträglichen Einsetzen bspw. eine Dichtung zwischen Futterrohr und Unterteilungselement verschmutzungsbeeinträchtigt sein kann).

Das Unterteilungselement kann bspw. auch einen im Verhältnis kurzen axialen Abschnitt der Durchgangsöffnung in die Durchlassöffnungen untergliedern, etwa im Falle einer gegenüber dem Ausführungsbeispiel gemäß Fig. 1 axial verkürzten Variante bzw. einer entsprechend längeren Durchgangsöffnung. Bevorzugt ist die Untergliederung in die Durchlassöffnungen über mindestens 10 %, 20 %, 30 %, 40 % bzw. 50 % der axialen Erstreckung ("Länge") der Durchgangsöffnung gegeben; je nach Ausgestaltung im Einzelnen kann eine Begrenzung nach oben bevorzugt sein (vgl. das Ausführungsbeispiel gemäß Fig. 1) und bspw. bei höchstens 90 %, 80 %, 70 % bzw. 60 % liegen (damit dann bspw. noch eine Pressdichtung eingesetzt werden kann), die Untergliederung kann aber auch über die gesamte Länge der Durchgangsöffnung vorliegen.

Eine jeweilige Durchlassöffnung kann bspw. einen Durchmesser von mindestens 55 mm, 60 mm, 65 mm bzw. 70 mm und (davon unabhängig) nicht mehr als 90 mm, 85 mm, 80 mm bzw. 75 mm haben, wobei Ober- und Untergrenze im Allgemeinen auch unabhängig voneinander offenbart sein sollen. Im Falle eines über die axiale Erstreckung variierenden Durchmessers wird hierbei der kleinste über die axiale Erstreckung auftretende Durchmesser zugrunde gelegt. Von den Durchlassöffnungen abgesehen verschließt das Unterteilungselement die Durchgangsöffnung bevorzugt, gegebenenfalls zusammen mit weiteren gemeinsam damit vergossenen Teilen (insbesondere einem Futterrohr); von den Durchlassöffnungen abgesehen ist die Durchgangsöffnung entlang der Durchgangsöffnungs-Längsachse blickend vorzugsweise abgedeckt, bevorzugt bereits alleine von dem Unterteilungselement.

Die "Mehrzahl" Durchlassöffnungen bzw. Leerrohre meint mindestens zwei, bevorzugt mindestens drei; bevorzugte Obergrenzen, die wiederum auch unabhängig von den Untergrenzen offenbart sein sollen, liegen bspw. bei höchstens sechs, fünf bzw. vier, besonders bevorzugt sind es genau vier Durchlassöffnungen bzw. Leerrohre.

Im Allgemeinen kann das Unterteilungselement mit dem Vergießen auch in einem Durchbruch (Kernbohrung etc.) einer bereits bestehenden Wand baulich integriert werden; bevorzugt wird aber die Wand gleichzeitig mit dem Vergießen des Unterteilungselements erst hergestellt. Wenngleich die Wand im Allgemeinen auch ein Fertigbauteil sein könnte, also nicht zwingend am Standort des Gebäudes hergestellt werden muss, ist letzteres bevorzugt. Während des Vergießens sind an beiden axialen Enden der Durchgangsöffnung Schalungselemente angeordnet, welche jeweils eine Schalungsfläche bilden, die jeweils über die Durchgangsöffnung hinweg unterbrechungsfrei und bevorzugt plan ist (die Schalungsflächen sind einander zugewandt und grenzen dann radial außerhalb der Durchgangsöffnung an das Vergussmaterial). In anderen Worten sind das Unterteilungselement und gegebenenfalls damit vergossene Teile derart ausgebildet, dass die Anordnung beim Vergießen (konkret nach dem Aushärten des Vergussmaterials, vor dem Entschalen) axial vollständig innerhalb der (entstehenden) Wand sitzt, also axial nicht über die Wandseitenflächen hinausragt.

Bei einer bevorzugten Ausführungsform werden gemeinsam mit dem Unterteilungselement eine Mehrzahl daran angeordnete und demgegenüber weichere Dichtelemente vergossen. Dabei ist je Durchlassöffnung mindestens ein Dichtelement vorgesehen, bevorzugt sind es mindestens zwei, besonders bevorzugt genau zwei; von den Untergrenzen unabhängige Obergrenzen können bspw. bei höchstens vier bzw. drei Dichtelementen je Durchlassöffnung liegen. Im Allgemeinen kann ein jeweiliges Dichtelement auch axial an die jeweilige Durchlassöffnung anschließen, bevorzugt liegt es innerhalb der axialen Erstreckung der jeweiligen Durchlassöffnung. Bezogen auf eine Mittenachse der jeweiligen Durchlassöffnung ist das jeweilige Dichtelement umlaufend und bevorzugt in sich geschlossen vorgesehen. Das einer jeweiligen Durchlassöffnung "Zugeordnetsein" eines jeweiligen Dichtelements meint, dass es in der Durchlassöffnung oder auf bzw. an einem die Durchlassöffnung bildenden Stutzen sitzt; bevorzugt ist eine Anordnung "in" oder "auf", schneidet eine zur Längsachse der Durchlassöffnung senkrechte Schnittebene also sowohl den durch die Durchlassöffnung bildenden Teil des Unterteilungselements als auch das Dichtelement.

Bevorzugt ist ein jeweiliges Dichtelement in einer die Durchgangsöffnungs-Längsachse beinhaltenden Schnittebene betrachtet derart profiliert, dass für das Einschieben eine geringere Kraft aufzubringen ist als für ein etwaiges Ausziehen in entgegengesetzter Richtung. Jedenfalls in dem zur Anlage am Leerrohr vorgesehenen Bereich kann das Dichtelement also bspw. eine flache und eine steile Flanke haben, wobei entlang der flachen Flanke eingeschoben wird; im Schnitt betrachtet ist bspw. auch ein V-förmiges und dabei derart orientiertes Dichtelement möglich, dass die Spitze des "V" zur Einschieberichtung entgegengesetzt liegt.

Die Dichtelemente können einstückig mit dem Unterteilungselement ausgebildet, also nicht zerstörungsfrei davon trennbar sein; sie können also mit dem Unterteilungselement bspw. als Mehrkomponenten-Spritzgussteil vorgesehen sein. Auch unabhängig davon ist das Mitvergossenwerden der Dichtelemente (in die Gebäudewand) gegenüber einem nachträglichen Einsetzen bspw. insoweit vorteilhaft, als das Dichtelement dann so auf der Baustelle nicht gesondert gehandhabt werden muss und entsprechend das Verschmutzungsrisiko verringert ist (Verschmutzungen können die Dichtfunktion beeinträchtigen). Zudem ist in einem Zeitpunkt, in dem die Leerrohre angesetzt werden, die Durchgangsöffnung von der Gebäudeaußenseite her in der Regel bereits nur noch schlecht zugänglich (ein Graben um das Gebäude wird soweit möglich sofort (wenige Tage) nach dem Entfernen der Schalung aufgefüllt, um ein Einspülen von Verschmutzung zu vermeiden); von der Gebäudeaußenseite her ist die Handhabung und Platzierung etwaiger Dichtelemente also allenfalls erschwert möglich, ist es jedenfalls leichter, die Schutzrohre nur ein- oder aufschieben zu müssen.

Das Unterteilungselement mit den Dichtelementen daran sitzt bevorzugt derart in der Durchgangsöffnung, dass je Durchlassöffnung das jeweilige zumindest eine zugeordnete Dichtelement in einer dem Gebäudeinneren distalen Hälfte der axialen Erstreckung der Durchgangsöffnung angeordnet ist, was im Falle mehrerer Dichtelemente je Durchlassöffnung bevorzugt für sämtliche davon gilt. In einfachen Worten sind die Dichtelemente also der Gebäudeaußenseite näher als der Gebäudeinnenseite angeordnet, entsprechend also in einem Bereich, der von der Gebäudeinnenseite her schlechter zugänglich ist (und in dem die Vorteile des Mitvergießens insoweit im Besonderen zu tragen kommen).

Generell ist die Wand bevorzugt eine Kellerwand, liegt die Durchgangsöffnung dann also, gegebenenfalls nach Auffüllen eines Grabens für die Schutzrohrverlegung, im Erdreich. Eine Kellerwand muss in der Regel einerseits eine gewisse Dicke haben (entsprechend lang ist die Durchgangsöffnung) und andererseits ist die Zugänglichkeit gebäudeaußenseitig eben begrenzt, es kommen also die geschilderten Vorteile im Besonderen zum Tragen.

Im Allgemeinen kann das Unterteilungselement bspw. Stutzen aufweisen, auf welche dann jeweils eines der Leerrohre aufgeschoben wird; ein bevorzugt vorgesehenes, jeweiliges Dichtelement liegt dann dichtend an bevorzugt einer Innenfläche des jeweiligen Leerrohres an (umlaufend).

Bei einer anderen bevorzugten Ausführungsform wird das jeweilige Leerrohr in die jeweilige Durchlassöffnung eingeschoben. Ein bevorzugt vorgesehenes Dichtelement liegt dann dichtend an bevorzugt der Außenfläche des jeweiligen Leerrohres an (umlaufend); das Leerrohr wird beim Ansetzen in die Durchlassöffnung und das Dichtelement eingeschoben. Generell ist der Begriff "Leerrohr" im Rahmen dieser Offenbarung auf einen länglichen Hohlkörper zu lesen, dessen Erstreckung entlang seiner Längsachse bspw. mindestens dem 5-, 10-, 15-, 20-, 30-, 40- bzw. 50-fachen seines Innen- und/oder Außendurchmessers entsprechen kann. Der Begriff ist ausdrücklich auch auf einen Schlauch, insbesondere einen Spiralschlauch, zu lesen, im Erdreich verlaufende Schutzrohre sind bevorzugt derart ausgestaltet. Dementsprechend kann das Leerrohr dann auch beliebig lang, im Prinzip als Endlosware verfügbar sein (denkbare Obergrenzen können aber zum Beispiel bei höchstens 50 m, 40 m, 30 m, 20 m bzw. 10 m liegen bzw. im Falle eines "Mantelrohrs" z. B. auch bei höchstens 2 m, 1,5 m bzw. 1 m).

Trotz einer möglichen Ausgestaltung als Schlauch hat das Leerrohr eine gewisse Mindeststabilität, etwa eine Ringsteifigkeit (bspw. genommen nach DIN EN ISO 9969) von in der Reihenfolge der Nennung zunehmend bevorzugt mindestens 0,5 kN/m², 1 kN/m², 2 kN/m², 3 kN/m², 4 kN/m², 5 kN/m², 6 kN/m², 7 kN/m² bzw. 8 kN/m² (mögliche Obergrenzen können bspw. bei höchstens 50 kN/m², 40 kN/m², 30 kN/m², 20 kN/m² bzw. 16 kN/m² liegen). Die senkrecht zur Längsachse genommene Wandstärke kann bspw. mindestens 2 mm, 2,5 mm bzw. 3 mm und (davon unabhängig) z. B. nicht mehr als 10 mm, 8 mm, 6 mm bzw. 4 mm ausmachen (jeweils in der Reihenfolge der Nennung zunehmend bevorzugt).

Während des Vergießens des Unterteilungselements können die Durchlassöffnungen zur Gebäudeaußenseite hin bevorzugt mit einem Deckel abgedeckt sein, was einem Eindringen von Vergussmaterial bzw. auch von Verschmutzungen nach dem Entschalen vorbeugen helfen kann. Bevorzugt deckt ein Deckel sämtliche Durchlassöffnungen gemeinsam ab, verschließt er also bspw. zusammen mit dem Unterteilungselement und/oder einem Futterrohr die Durchgangsöffnung. Im Allgemeinen kann der Deckel auch monolithisch (ohne Materialgrenze dazwischen) mit einem Teil ausgebildet sein, das nach dem Herausnehmen des Deckels in der Durchgangsöffnung verbleibt; der Deckel könnte dann über eine Sollbruchstelle damit verbunden sein und durch Auftrennen derselben herausgenommen werden, bspw. mit einem Werkzeug ausgestoßen werden. Bevorzugt ist der Deckel zerstörungsfrei herausnehmbar, kann er also bspw. zur Gebäudeaußenseite hin herausgezogen oder herausgedreht werden, auch eine kombinierte Dreh-/Zieharretierung ist möglich (Bajonett).

Erfindungsgemäß sind die Leerrohre also von der Gebäudeaußenseite an das Unterteilungselement angesetzte Schutzrohre, die nach Auffüllen eines Grabens bevorzugt im Erdreich verlaufen. Insoweit wird ausdrücklich auf die vorstehende Offenbarung betreffend die Schutzrohre verwiesen, etwa die Angaben zu bevorzugten Längen bzw. Durchmessern bzw. auch die Materialbeschaffenheit oder auch die Möglichkeiten des "Ansetzens" betreffend. Im Unterschied zu der vorstehenden Ausführungsform ist der Ansetzbereich jedoch nicht außerhalb, sondern bevorzugt innerhalb der Durchgangsöffnung angeordnet.

Für das Ansetzen der Schutzrohre von der Gebäudeaußenseite her könnte den Durchlassöffnungen jeweils ein zur Gebäudeaußenseite hin weisender Rohrstutzen zugeordnet sein und könnten die Schutzrohre dann aufgeschoben werden. Ein jeweiliger Rohrstutzen könnte im Allgemeinen auch mehrteilig zu dem Unterteilungselement, also damit zusammengesetzt sein (in diesem Fall aber bereits vor dem Vergießen). Bevorzugt sind mit dem Unterteilungselement einstückige, nicht zerstörungsfrei davon trennbare Rohrstutzen, besonders bevorzugt sind sie mit dem Unterteilungselement monolithisch. Unabhängig von der Ausgestaltung der Rohrstutzen im Einzelnen weisen die Schutzrohre, die aufgeschoben werden, an ihrem aufgeschobenen Ende bevorzugt jeweils eine Muffe auf, sodass es im Ansetzbereich keinen Durchmessersprung gibt, was das spätere Hindurchführen der Leitung vereinfacht.

Die Schutzrohre können aber andererseits auch in das Unterteilungselement eingeschoben werden, bevorzugt jeweils bis zu einem Anschlag; insoweit bildet dann das Unterteilungselement selbst je Durchlassöffnung eine Muffe. Die Begrenzung durch einen Anschlag ist sowohl im Falle des Ein- als auch des Aufschiebens bevorzugt.

Erfindungsgemäß ist bzw. wird den Durchlassöffnungen gebäudeinnenseitig jeweils eine Einzelabdichtung zugeordnet. Eine jeweilige Einzelabdichtung ist bevorzugt derart aufgebaut, dass ein jeweiliger Einzel-Elastomerkörper zum Dichten entlang der Durchgangsöffnungs-Längsachse komprimiert wird, um sich senkrecht dazu dichtend anzulegen, bevorzugt an das Unterteilungselement selbst oder im Falle der von der Gebäudeinnenseite her eingeschobenen Leerrohre an die von der Gebäudeinnenseite her eingesetzte Pressdichtung. Im letztgenannten Fall legt sich der Einzel-Elastomerkörper bevor- **[Fortsetzung S. 15]** zugt an den zur Gebäudeinnenseite hin weisenden Presskörper der Pressdichtung, je Einzelabdichtung an eine Innenwandung des Presskörpers (eine jeweilige Innenwandung begrenzt eine jeweilige Durchtrittsöffnung im Presskörper, mit jeder Durchlassöffnung des Unterteilungselements fluchtet eine jeweilige Durchtrittsöffnung im Presskörper axial); bevorzugt stützt sich ein jeweiliger Einzel-Elastomerkörper zum Zwecke der axialen Kompression mit seiner der Gebäudeinnenseite abgewandten Stirnseite ebenfalls an diesem (der Gebäudeinnenseite zugewandten) Presskörper ab. Unabhängig davon im Einzelnen (auch im Falle der Anlage am Unterteilungselement) ist je Einzelabdichtung zur Kompression des jeweiligen Einzel-Elastomerkörpers bevorzugt jeweils ein gesonderter, unabhängig von den anderen Einzelabdichtungen betätigbarer Einzel-Presskörper vorgesehen.

Eine jeweilige Einzelabdichtung kann dabei als Blindverschluss für sich die jeweilige Durchlassöffnung vor dem Hindurchführen der Leitung verschließen und/oder nach dem Einführen der Leitung zu dieser hin dichten. Dazu kann der Einzel-Elastomerkörper mit einer Durchgangsöffnung versehen sein, die originär mit einem Stopfen, bevorzugt aus demselben Elastomermaterial, verschlossen ist; ferner können in der Durchgangsöffnung des Einzel-Elastomerkörpers in Bezug auf deren Längsachse umlaufende, zur Anpassung an unterschiedliche Leitungsdurchmesser herausnehmbare Schalen vorgesehen sein (bevorzugt ebenfalls aus demselben Elastomermaterial); die Schalen und/oder der Stopfen können mit dem übrigen Einzel-Elastomerkörper bevorzugt über Materialbrücken zusammenhängen, die für das Herausnehmen aufgetrennt werden.

In bevorzugter Ausgestaltung sind die Einzelabdichtungen derart ausgebildet, dass sie durch Anziehen einer jeweiligen Schraube in einen Dichtsitz bringbar und der Dichtsitz durch Lösen der Schraube aufhebbar ist. Bevorzugt wirkt die Schraube auf einen stirnseitigen Einzel-Presskörper, der beim Anziehen gegen den jeweiligen Einzel-Elastomerkörper gedrückt und dieser damit axial gestaucht wird (und sich dichtend anlegt). Bevorzugt sind je Einzelabdichtung mehrere Schrauben vorgesehen, besonders bevorzugt genau zwei. Unabhängig davon im Einzelnen greift die Schraube in ein Gewinde (bevorzugt Innengewinde), welches entweder von dem Unterteilungselement selbst gebildet wird (zum Beispiel eingeschnitten ist), oder von einem einstückig damit verbundenen (nicht zerstörungsfrei davon trennbaren) Teil gebildet wird. Das mit dem Unterteilungselement einstückige Teil ist bevorzugt ein Metallteil, besonders bevorzugt eine Mutter; vorzugsweise wird das Teil bei der Herstellung des Unterteilungselements in dieses eingeformt, also bspw. bei einem formenden Verfahren in das Formwerkzeug eingelegt. Besonders bevorzugt wird eine Metallmutter in einem Spritzgussverfahren bei der Herstellung des Unterteilungselements umspritzt. Das Gewinde ist jedenfalls bereits vorhanden, wenn das Unterteilungselement in der Wand vergossen wird.

Während des Vergießens können bereits auch die Einzelabdichtungen eingesetzt und entsprechend mit einer jeweiligen Schraube in Position gehalten sein. Andererseits kann während des Vergießens zur Gebäudeinnenseite hin aber auch ein gesonderter Verschlussdeckel vorgesehen sein, entweder je Durchlassöffnung ein eigener Deckel, der bspw. über das jeweilig zugeordnete Innengewinde befestigt sein kann, oder auch ein sämtliche Durchlassöffnungen gemeinsam zur Gebäudeinnenseite hin abdeckender Deckel, bezüglich dessen Ausgestaltungs-/Befestigungsmöglichkeiten auf die vorstehende Offenbarung den gebäudeaußenseitigen Deckel betreffend verwiesen wird.

Bei einer bevorzugten Ausführungsform ist das Unterteilungselement ein Formteil aus Polymerbeton. Auch wenn dieser gegenüber Kunststoff gegebenenfalls das Gewicht betreffend nachteilig sein kann, haben die Erfinder eine gute mechanische Stabilität beobachtet, was insbesondere hinsichtlich des eingangs diskutierten, vergrößerten Durchgangsöffnungs-Durchmessers Vorteile bieten kann. Zudem kann sich insbesondere bei Beton als Vergussmaterial auch ein gut dichtender Kontakt zwischen den beiden Materialien ergeben. Beton als Vergussmaterial ist im Übrigen aber auch davon unabhängig, ganz allgemein bevorzugt (im Allgemeinen käme hingegen bspw. auch Mörtel, insbesondere Quellmörtel, als Vergussmaterial infrage). Ein etwaiges Teil mit Gewinde (insbesondere Metallteil/Mutter) und/oder ein bzw. mehrere Dichtelemente können auch im Falle eines Formteils aus Polymerbeton als Einlegeteile mit eingeformt sein.

Wie bereits erwähnt, kann das Unterteilungselement bereits für sich die Durchgangsöffnung frei halten, bei einer bevorzugten Ausführungsform kann es aber zu diesem Zweck auch mit einem Futterrohr zusammengesetzt sein, das bezogen auf die axiale Erstreckung der Durchgangsöffnung zumindest einen Abschnitt davon frei hält. In dem entsprechenden Abschnitt grenzt das Vergussmaterial dann also an das Futterrohr, bevorzugt grenzt es in einem anderen axialen Abschnitt an das Unterteilungselement, sodass das erstarrte Vergussmaterial die beiden dann bspw. auch in ihrer Relativposition festlegt.

Im Allgemeinen können das Unterteilungselement und das Futterrohr auch bereits zuvor aneinander festgelegt, bspw. miteinander verklebt oder -verschraubt sein. Andererseits kann aber auch bevorzugt sein, dass sie vor dem Vergießen, bei der Montage an einer Schale noch relativ zueinander beweglich sind, nämlich derart, dass sich die Länge der dann davon frei gehaltenen Durchgangsöffnung einstellen lässt. Es kann also bspw. das eine in dem anderen Teil verschiebbar und über die Relativpositionen der Verschiebbarkeit die Länge einstellbar sein (eine maximal einstellbare Gesamtlänge ist größer als die Länge jedes Teils für sich). Bevorzugt ist ein Mechanismus vorgesehen, mit dem die beiden Teile in zumindest einigen der Relativpositionen zueinander lagefixiert werden können (stufenweise Verstellbarkeit), bevorzugt ein Rastmechanismus. In einer jeweiligen Rastposition ist dann also in Bezug auf die axiale Richtung eine Hinterschneidung ausgebildet, die jedenfalls innerhalb gewisser Grenzen gegen ein weiteres Verrutschen sichert; bevorzugt greift ein am Unterteilungselement ausgebildeter, zur Durchgangsöffnungs-Längsachse hin hervortretender Vorsprung in eine Ausnehmung radial außenseitig am Futterrohr und gibt es axial mehrere solche Ausnehmungen. Im Allgemeinen kann aber auch eine stufenlose Verstell- bzw. Arretierbarkeit möglich sein, kann im Falle der ineinander geführten Teile also bspw. das Äußere auf das Innere gedrückt werden.

Bevorzugt ist zumindest ein axialer Abschnitt des Unterteilungselements innerhalb des Futterrohrs angeordnet und untergliedert es die Durchgangsöffnung (auch) innerhalb des Futterrohrs in die Durchlassöffnungen. Bevorzugt liegt das Unterteilungselement mit einer Außenwandfläche (bezogen auf Richtungen senkrecht von der Durchgangsöffnungs-Längsachse weg) an einer Innenwandfläche des Futterrohrs an; bevorzugt kann dort zusätzlich eine Dichtung vorgesehen sein, die das Unterteilungselement gegen das Futterrohr dichtet.

Bevorzugt kann auch sein, dass das Unterteilungselement an einer Außenwandfläche des Futterrohrs anliegt, im Allgemeinen auch alternativ zu der eben beschriebenen Anlage innen, bevorzugt aber in Kombination damit; es kann dann nämlich in dem inneren Anlagebereich bspw. eine Dichtung vorgesehen und in dem äußeren Anlagebereich ein Rastmechanismus ausgebildet sein. Die kombinierte Anlage innen und außen kann aber auch unabhängig von einer Längenverstell-/Arretierbarkeit von Interesse sein, nämlich einen stabilen mechanischen Sitz ermöglichen. In einer die Durchgangsöffnungs-Längsachse beinhaltenden Schnittebene betrachtet kann ein Bereich des Unterteilungselements dann also U-förmig ausgebildet und das Futterrohr bzw. ein endseitiger Abschnitt davon in dieser U-Form angeordnet sein.

Bei einer bevorzugten Ausführungsform weist das Unterteilungselement axial endseitig eine Flanschplatte auf, die nach dem Vergießen an eine Wandseitenfläche grenzt (in Richtungen senkrecht zur Durchgangsöffnungs-Längsachse); bevorzugt liegt eine gebäudeaußenseitige Stirnfläche der Flanschplatte mit der Wandseitenfläche in einer Ebene.

Bei einer bevorzugten Ausführungsform weist das Unterteilungselement eine Flanschplatte auf (bevorzugt endseitig, aber nicht zwingend) und ist an dieser Flanschplatte bereits beim Vergießen des Unterteilungselements eine Wärmedämmung angeordnet. Die Wärmedämmung ist aus einem Material mit einer geringen Wärmeleitfähigkeit, bspw. höchstens 0,1 W/mK bzw. 0,05 W/mK (technisch bedingt können Untergrenzen bspw. bei mindestens 0,001 W/mK, 0,002 W/mK, 0,003 W/mK bzw. 0,004 W/mK liegen). Entlang der Durchgangsöffnungs-Längsachse genommen kann die Wärmedämmung bspw. eine Erstreckung von mindestens 20 mm, 30 mm, 40 mm, 50 mm, 60 mm, 70 mm, 80 mm, 90 mm bzw. 100 mm haben (in der Reihenfolge der Nennung zunehmend bevorzugt), wobei mögliche Obergrenzen bspw. bei höchstens 300 mm, 250 mm, 200 mm bzw. 150 mm liegen können, wiederum in der Reihenfolge der Nennung zunehmend bevorzugt und im Allgemeinen auch unabhängig von einer Untergrenze.

Die Wärmedämmung kann bspw. auf Polystyrol-Basis (etwa als expandiertes oder extrudiertes Polystyrol) oder aber auch auf Mineralwoll-Basis vorgesehen sein. Ein Vorteil des Mitvergießens kann sich bspw. dahingehend ergeben, dass, wenn die gebäudeaußenseitige Wandseitenfläche nach dem Gießen der Wand gedämmt wird, also bspw. Dämmplatten angebracht werden, hierbei nicht allzu genau an die Durchgangsöffnung heran gearbeitet werden muss, in diesem Bereich dann aber gleichwohl eine gute Dämmung gegeben ist. Die Dämmung kann im Allgemeinen auch lose an der Flanschplatte sitzen, bevorzugt aber damit verklebt sein. Unabhängig davon im Einzelnen ist die Dämmung relativ zur Flanschplatte bevorzugt derart vorgesehen, dass sie der Gebäudeinnenseite proximal angeordnet ist. Die bevorzugt endseitig angeordnete Flanschplatte kann dann die Wärmedämmung beim Vergießen bzw. Ver- und Entschalen und auch danach zur Gebäudeaußenseite hin schützen.

Bei einer bevorzugten Ausführungsform weist das Unterteilungselement einen zur Gebäudeaußenseite hin weisenden, zumindest abschnittsweise um die Durchgangsöffnungs-Längsachse umlaufenden Vorsprung auf. An diesen wird, wenn die Gebäudeaußenwand dann gedämmt wird, eine Dämmplatte angedrückt und wird an der Dämmplatte so ein zur Berücksichtigung der Durchgangsöffnung (bzw. des maßgeblichen Teils davon) auszutrennender Bereich markiert. Sofern sich im Bereich der Durchgangsöffnung mehrere Dämmplatten treffen, wird auf diese Weise ein von der jeweiligen Dämmplatte abzutrennender Rand- bzw. Eckbereich markiert.

In bevorzugter Ausgestaltung werden mit der Gebäudeeinführung mindestens zwei, vorzugsweise mindestens drei, Sparten in das Gebäude eingeführt, wobei eine mögliche Obergrenze bei höchstens vier liegt, besonders bevorzugt sind es genau vier Sparten. "Sparten" bezieht sich hierbei auf die Gewerke Strom, Gas, Wasser und Telekommunikation. Jeder der Sparten ist im Erdreich ein eigenes Schutzrohr (in dem die eigentliche, jeweilige Leitung geführt ist) und entsprechend jeweils eine eigene Durchlassöffnung des Unterteilungselements zugeordnet.

Im Folgenden wird die Erfindung an Hand von Ausführungsbeispielen näher erläutert, wobei die einzelnen Merkmale im Rahmen der nebengeordneten Ansprüche auch in anderer Kombination erfindungswesentlich sein können.

Im Einzelnen zeigt
- Figur 1a: eine Momentaufnahme einer ersten nicht erfindungsgemäßen Verwendung, wobei von einer Gebäudeinnenseite her Leerrohre in ein zuvor einbetoniertes Unterteilungselement eingeschoben werden;
- Figur 1: b eine Einbausituation auf jene gemäß Figur 1a folgend, in der von der Gebäudeaußenseite her auf die zuvor gemäß Figur 1a von der Gebäudeinnenseite her eingeschobenen Leerrohre jeweils ein Schutzrohr aufgeschoben wird;
- Figur 2: eine Momentaufnahme einer erfindungsgemäßen Verwendung, bei welcher ebenfalls Leerrohre in ein zuvor einbetoniertes Unterteilungselement eingeschoben werden, allerdings als Schutzrohre von der Gebäudeaußenseite her;
- Figur 3: eine Variante zu der Verwendung gemäß Figur 2, wobei die Leerrohre nicht auf-, sondern eingeschoben werden.

Figur 1a zeigt eine Montagesituation im Falle eines Unterteilungselements 1, das mit einem Futterrohr 2 zusammengesetzt gemeinsam in einer Außenwand 3 (Gebäudeaußenwand) aus Beton vergossen wurde. Zusammen halten das Unterteilungselement 1 und das Futterrohr 2 in dem erstarrten Beton eine Durchgangsöffnung 4 frei, die einen Durchmesser 5 von rund 200 mm hat. Die Außenwand 3 ist eine Kellerwand und trennt die Gebäudeinnenseite 6 (in der Figur rechts) von der Gebäudeaußenseite 7 (in der Figur links).

Das Unterteilungselement 1 gliedert einen der Gebäudeinnenseite 6 distalen Abschnitt der Durchgangsöffnung 4 in eine Mehrzahl Durchlassöffnungen 8, insgesamt vier, wovon in dem Schnitt zwei zu sehen sind. Die Durchlassöffnungen 8 haben jeweils einen Durchmesser 9 von rund 70 mm. Die Schnittebene der vorliegenden Darstellung liegt so, dass sie eine Längsachse 10 der Durchgangsöffnung 4 beinhaltet.

In der dargestellten Situation werden nach dem Einbetonieren bzw. Herstellen der Außenwand von der Gebäudeinnenseite 6 her Leerrohre 11 in die Durchlassöffnung 4 eingebracht (die Einschieberichtung ist mit einem Pfeil gekennzeichnet), nämlich je Durchlassöffnung 8 des Unterteilungselements 1 jeweils ein Leerrohr 11. Die Leerrohre 11 werden in die Durchlassöffnungen 8 ein- und darin vorgeschoben, bis sie an der Gebäudeaußenseite 7 aus der Durchgangsöffnung 4 hervorstehen, auch über an der gebäudeaußenseitigen Wandseitenfläche 12 angeordnete Dämmplatten 13 hinaus. In einer jeweiligen Endposition erstreckt sich ein jeweiliges Leerrohr 11 dann also innerhalb der Durchgangsöffnung 4 und gebäudeaußenseitig darüber hinaus.

Von der Gebäudeaußenseite 7 her wird dann auf jedes der Leerrohre 11 ein jeweiliges Schutzrohr 15 aufgeschoben, vgl. Figur 1b. Hierbei handelt es sich um Spiralschläuche, die jeweils endseitig mit einer Muffe versehen sind. Durch diese Schutzrohre 15 kann dann anschließend die eigentliche Leitung geführt werden, wobei jedes Schutzrohr 15 (zusammen mit dem jeweiligen Leerrohr 11) mit einer jeweilig anderen der Sparten Telekommunikation, Elektro, Wasser und Gas belegt wird.

In dem der Gebäudeinnenseite 6 proximalen Abschnitt der Durchgangsöffnung 4 werden die Leerrohre 11 mit einer Pressdichtung 16 gegeneinander und gegen eine Laibung 17 des Futterrohres 2 gedichtet. Die Pressdichtung 16 weist einen Elastomerkörper 16a und axial beidseitig davon angeordneten Presskörpern 16b auf, die durch Anziehen (nicht dargestellter) Spannbolzen axial aufeinander zu bewegt werden; in Folge dessen wird der Elastomerkörper 16a in dieser Richtung gestaucht und legt sich senkrecht dazu an die Laibung 17 und die Leerrohre 11 an bzw. dichtet dagegen (eine Anlage kann auch schon zuvor bestehen). In dem der Gebäudeinnenseite 6 zugewandten Presskörper 16b ist je Durchlassöffnung 8a, b eine diese jeweils zur Gebäudeinnenseite 6 hin verschließende Einzelabdichtung 30a, b vorgesehen. Jede der Einzelabdichtungen 30 weist einen jeweiligen Einzel-Elastomerkörper 30aa, ba, auf, der sich axial an dem Presskörper 16b der Pressdichtung 16 abstützt. Die Einzel-Elastomerkörper 30aa, ba werden über einen jeweiligen Einzel-Presskörper 30ab, bb axial komprimiert und legen sich senkrecht dazu jeweils dichtend an eine Innenwandung des Presskörpers 16b an. Dazu sind die Einzel-Presskörper 30ab, bb relativ zu dem Presskörper 16b verschraubt (nicht im Einzelnen dargestellt); durch Anziehen der Schrauben wird der jeweilige Einzel-Presskörper 30 ab, bb zu dem Presskörper 16b hin bewegt und der jeweilige Einzel-Elastomerkörper 30 aa, ba in einen Dichtsitz gebracht.

Die Pressdichtung 16 ist auch bereits in der Situation gemäß Figur 1a an den Leerrohren 11 angeordnet und wird gemeinsam mit diesen in die Durchgangsöffnung 4 eingebracht.

Das Unterteilungselement 1 weist eine Flanschplatte 1b auf, die monolithisch mit dem die Durchgangsöffnung 4 in die Durchlassöffnungen 8 untergliedernden Abschnitt 1a ausgebildet ist und nach dem Vergießen an die Wandseitenfläche 12 grenzt. Ferner weist das Unterteilungselement 1 einen außenseitig des Futterrohres 2 angeordneten Abschnitt 1c auf, von dem ein nach innen, zur Längsachse 10 hin hervortretender Vorsprung in eine Ausnehmung im Futterohr 2 greift. Das Futterrohr 2 weist mehrere solche, axial zueinander beabstandete Ausnehmungen auf, das Unterteilungselement 1 und das Futterohr 2 können also axial zueinander versetzt und dabei in unterschiedlichen Relativpositionen arretiert werden (Rastmechanismus). Entsprechend wird die Anordnung vor dem Einbau an die Dicke der herzustellenden Außenwand 3 angepasst, vorliegend ist die kürzest mögliche Länge gewählt. Das Unterteilungselement 1 und das Futterrohr 2 sind über eine Dichtung 17 gegeneinander gedichtet.

An dem Unterteilungselement 2 sind ferner eine Mehrzahl Dichtelemente 18 angeordnet, nämlich in jeder der Durchlassöffnungen 8 zwei. Die Dichtelemente 18 sind einstückig mit dem Unterteilungselement 1 ausgebildet, und zwar aus einem thermoplastischen Elastomer in einem Zweikomponenten-Spritzgussverfahren an das Unterteilungselement aus Acryl-Butadien-Styrol angespritzt. Im Schnitt betrachtet haben sie ein solches Profil, dass das Einschieben der Leerrohre 11 leichter als ein etwaiges Herausziehen zur Gebäudeinnenseite 6 hin ist.

An der Flanschplatte 1b des Unterteilungselements 1 ist eine Wärmedämmung 20 angeordnet, nämlich ein Teil aus expandiertem Polystyrol. Die Wärmedämmung 20 wird gemeinsam mit Unterteilungselement 1 und Futterohr 2 in der Außenwand 3 vergossen. Werden auf die gebäudeaußenseitige Wandseitenfläche 12 die Dämmplatten 13 aufgebracht, müssen diese nicht allzu genau an die Durchgangsöffnung 4 angearbeitet werden und ist aufgrund der integrierten Wärmedämmung 20 gleichwohl eine gute Isolierung gegeben. Andererseits weist das Unterteilungselement 1 aber auch einen zur Gebäudeaußenseite 7 hervortretenden Vorsprung 25 auf, an den die Dämmplatten 13 bei der Montage angedrückt werden und so ein jeweilig aus der Dämmplatte 13 zur Berücksichtigung der Einführung herauszutrennender Bereich markiert wird.

Figur 2 zeigt ebenfalls ein bei der Herstellung einer Außenwand 3 durch Gießen mit Beton in diese integriertes Unterteilungselement 1. Im Unterschied zu den Figuren 1a, b ist dieses nicht mit einem Futterrohr zusammengesetzt, sondern hält als Formteil für sich die Durchgangsöffnung 4 in der Außenwand 3 frei. Vorliegend handelt es sich um ein Formteil aus Polymerbeton. Ferner besteht ein Unterschied zu Figuren 1a, b insoweit, als die an die Durchlassöffnungen 8 gesetzten Leerrohre 11 in diesem Fall nicht von der Gebäudeinnenseite 6 her eingebracht werden, sondern die Leerrohre 11 gleich den von der Gebäudeaußenseite 7 her eingeschobenen Schutzrohren 15 sind (eine entsprechende Verwendung wäre selbstverständlich auch bei einem analog Figuren 1a, b mit einem Futterrohr 2 kombinierten Unterteilungselement möglich, auch an dieses könnten die Leerrohre 11 analog Figur 2 von der Gebäudeaußenseite 7 her direkt als Schutzrohre 15 angesetzt werden).

Figur 2 zeigt ferner Einzelabdichtungen 30, mit denen die Durchlassöffnungen 8 zur Gebäudeinnenseite 6 hin verschlossen sind. Die Einzelabdichtungen 30 weisen jeweils einen Einzel-Elastomerkörper auf, der von einem Einzel-Presskörper in einen Sitz am Unterteilungselement 12 gedrückt und so dagegen gedichtet wird. Dazu sind je Einzelabdichtung 30 zwei Schrauben 31 vorgesehen, die in ein Innengewinde greifen. Ein jeweiliges Innengewinde wird jeweils von einer Mutter 32 gebildet, die Muttern 32 sind als Einlegeteile in das Unterteilungselement 1 aus Polymerbeton eingeformt. Beim Vergießen des Unterteilungselements 1 sind sie also bereits daran angeordnet; sie stehen in anderen Worten dann als integraler Teil für die Befestigung der Einzelabdichtungen 30 zur Verfügung.

Das Unterteilungselement 1 gemäß Figur 3 gleicht in weiten Teilen jenem gemäß Figur 2. Im Unterschied dazu werden die Leer- 11 bzw. Schutzrohre 15 jedoch nicht eingeschoben, sondern auf zur Gebäudeaußenseite 7 hin weisende, monolithisch mit dem übrigen Unterteilungselement 1 ausgebildete Rohrstutzen 1d aufgeschoben. Als Einlegeteil könnte an den Rohrstutzen 1d jeweils ein vorliegend nicht dargestelltes Dichtelement 18 angeordnet sein, das dann zum jeweiligen Leer- 11 bzw. Schutzrohr 15 hin dichtet.

## Patentansprüche

1. Verwendung einer Gebäudeeinführung zum Einbau in eine Außenwand (3) eines Gebäudes und zum Einführen einer Mehrzahl Leitungen in das Gebäude,
welche Gebäudeeinführung ein Unterteilungselement (1) aufweist, das durch Vergießen mit zunächst fließfähigem und dann erstarrendem Vergussmaterial baulich in die Gebäudeaußenwand (3) integriert wird und dann eine Mehrzahl Durchlassöffnungen (8) bildet,
bei welcher Verwendung ferner nach dem Vergießen des Unterteilungselements (1) an jede der Durchlassöffnungen (8) davon jeweils ein Leerrohr (11) zur Verlängerung der jeweiligen Durchlassöffnung (8) angesetzt wird und dann in zumindest einigen der Leerrohren (11) jeweils zumindest eine der Leitungen geführt wird,
wobei die Leerrohre (11) sich dann jeweils gebäudeaußenseitig vom Gebäude weg erstreckende Schutzrohre (15) sind, die jeweils von der Gebäudeaußenseite (7) her an das Unterteilungselement (1) angesetzt werden, wobei das Unterteilungselement (1) nach dem Vergießen in einer sich zwischen einer Gebäudeinnenseite (6) und der Gebäudeaußenseite (7) erstreckenden, von dem erstarrten Vergussmaterial begrenzten Durchgangsöffnung (4) angeordnet ist,
und wobei das Unterteilungselement (1) die Durchgangsöffnung (4) in Bezug auf Richtungen senkrecht zu deren Längsachse (10) in die Mehrzahl Durchlassöffnungen (8) untergliedert,
wobei den Durchlassöffnungen (8) des Unterteilungselements (1) zur Gebäudeinnenseite (6) hin jeweils eine Einzelabdichtung (30) zugeordnet ist, die entweder für sich als Blindverschluss die jeweilige Durchlassöffnung (8) vor der Belegung mit der Leitung zur Gebäudeinnenseite (6) hin verschließt oder nach dem Einführen der jeweiligen Leitung zu dieser hin dichtet.

2. Verwendung nach Anspruch 1, bei welcher die Gebäudeeinführung an dem Unterteilungselement (1) eine Mehrzahl Dichtelemente (18) aus einem gegenüber dem Unterteilungselementmaterial weicheren Dichtelementmaterial aufweist und den Durchlassöffnungen (8) jeweils mindestens eines der Dichtelemente (18) zugeordnet ist, bei welcher Verwendung das Unterteilungselement (1) mit den Dichtelementen (18) daran vergossen wird und dann jedes der Leerrohre (11) nach dem Ansetzen an die jeweilige Durchlassöffnung (8) von dem jeweiligen zumindest einen zugeordneten Dichtelement (18) gegen das Unterteilungselement (1) gedichtet ist.

3. Verwendung nach Anspruch 1 oder 2, bei welcher bei dem Ansetzen an die jeweilige Durchlassöffnung (8) das jeweilige Leerrohr (11) in die jeweilige Durchlassöffnung (8) eingeschoben wird.

4. Verwendung nach einem der vorstehenden Ansprüche, bei welcher die Einzelabdichtungen (30) jeweils durch Anziehen einer jeweiligen Schraube (31) in einen Dichtsitz bringbar und durch Lösen der Schraube (31) aus dem Dichtsitz lösbar sind, wozu die Schrauben (31) jeweils in ein Gewinde greifen, welche Gewinde jeweils von dem Unterteilungselement (1) selbst oder einem einstückig damit verbundenen Teil (32) gebildet werden und bereits vorhanden sind, wenn das Unterteilungselement (1) durch das Vergießen baulich in die Gebäudeaußenwand (3) integriert wird.

5. Verwendung nach einem der vorstehenden Ansprüche, bei welcher zumindest das Unterteilungselement (1) ein Formteil aus Polymerbeton ist.

6. Verwendung nach einem der vorstehenden Ansprüche, bei welcher das Unterteilungselement (1) an ein Futterrohr (2) angesetzt ist und gemeinsam mit dem Futterrohr (2) mit dem zunächst fließfähigen und dann erstarrenden Vergussmaterial vergossen und damit baulich in die Gebäudeaußenwand (3) integriert wird, wobei das Futterrohr (2) zumindest in einem Abschnitt der Durchgangsöffnung (4) an das Vergussmaterial grenzt und die Durchgangsöffnung (4) freihält.

7. Verwendung nach Anspruch 6, bei welcher das Unterteilungselement (1) und das Futterrohr (2) derart in unterschiedliche Relativpositionen zueinander versetzbar sind, dass eine Länge der davon dann nach dem Vergießen freigehaltenen Durchgangsöffnung (4) in der Gebäudeaußenwand (3) einstellbar ist, wobei vor dem Vergießen durch Auswählen einer der Relativpositionen die Länge eingestellt wird.

8. Verwendung nach einem der vorstehenden Ansprüche, bei welcher das Unterteilungselement (1) endseitig eine Flanschplatte (1b) aufweist, die nach dem Vergießen an eine Wandseitenfläche (12) der Gebäudeaußenwand (3) grenzt, bevorzugt gebäudeaußenseitig, und sich von der Durchgangsöffnung (4) nach radial außen weg erstreckt.

9. Verwendung nach einem der vorstehenden Ansprüche, bei welcher das Unterteilungselement (1) eine Flanschplatte (1b) aufweist, die sich nach dem Vergießen von der Durchgangsöffnung (4) nach radial außen weg erstreckt, wobei an der Flanschplatte (1b) bereits beim Vergießen eine Wärmedämmung (20) angeordnet ist, die gemeinsam mit dem Unterteilungselement (1) mit dem zunächst fließfähigen und dann erstarrenden Vergussmaterial vergossen und damit baulich in die Gebäudeaußenwand (3) integriert wird, wobei die Wärmedämmung (20) dann im Verhältnis zu der Flanschplatte (1b) bevorzugt proximal der Gebäudeinnenseite (6) angeordnet ist.

10. Verwendung nach einem der vorstehenden Ansprüche, bei welcher das Unterteilungselement (1) einen nach dem baulich Integrieren zur Gebäudeaußenseite (7) hin hervortretenden, zumindest abschnittsweise um die Längsachse (10) der Durchgangsöffnung (4) umlaufenden Vorsprung (25) aufweist, mit dem an einer Wärmedämmplatte (13) durch Andrücken derselben vor deren Montage ein auszutrennender, die Durchgangsöffnung (4) berücksichtigender Bereich markiert werden kann.

11. Verwendung nach einem der vorstehenden Ansprüche, bei welcher mit der Gebäudeeinführung zumindest zwei der Sparten Strom, Gas, Wasser und Telekommunikation in das Gebäude eingeführt werden.

## Claims

1. A use of a building entry for integration into an outer wall (3) of a building and for leading a plurality of lines into the building,
said building entry comprising a subdividing element (1) which is structurally integrated into the outer building wall (3) by casting with a casting material capable of flowing first and then hardening, the integrated subdividing element (1) then forming a plurality of passage openings (8),
in which use an empty tube (11) is further placed at each of the passage openings (8) to extend the respective passage opening (8) after the structural integration of the subdividing element (1) by casting and then at least one of the lines is inserted into at least some of the respective empty tubes (11),
wherein the empty tubes (11) are protective tubes (15) extending away from and on the outside of the building and being placed from the outside of the building (7), at the subdividing element (1),
wherein the subdividing element (1) is arranged, after casting, in a through opening (4) which extends between an inside (6) of the building and the outside (7) of the building and is defined by the hardened casting material, and wherein the subdividing element (1) subdivides the through opening (4) into the plurality of passage openings (8) with respect to directions perpendicular to its longitudinal axis (10),
wherein a respective individual seal (30) is assigned to the passage openings (8) of the subdividing element (1) towards the inside (6) of the building, the respective individual seal being either a blind closure closing the respective passage opening (8) towards the inside (6) of the building prior to the line being led through, or sealing against the respective line after the latter has been led through.

2. The use according to claim 1, the building entry comprising a plurality of sealing elements (18) at the subdividing element (1), which sealing elements are made of a sealing element material softer in comparison to the subdividing element material, wherein at least one of the sealing elements (18) is assigned to each passage opening (8), in which use the subdividing element (1) is structurally integrated by casting, with the sealing elements (18) arranged thereon, wherein, after placing the empty tubes (11) at the respective passage opening (8), each of the empty tubes (11) is sealed by the respective at least one assigned sealing element (18) against the subdividing element (1).

3. The use according to claim 1 or 2, wherein the respective empty tube (11) is pushed into the respective passage opening (8) when it is placed at the respective passage opening (8).

4. The use according to one of the preceding claims, wherein the individual seals (30) can respectively be brought into a sealing state by tightening a respective screw (31) and can respectively be removed from the sealing state by untightening the screw (31), the screws (31) engaging respectively in a thread, the threads being respectively formed by the subdividing element (1) itself or by a part (32) connected with the subdividing element (1) in a single piece, the threads already being in place when the subdividing element (1) is structurally integrated into the outer building wall (3) by casting.

5. The use according to one of the preceding claims, wherein at least the subdividing element (1) is a mould part made of polymer concrete.

6. The use according to one of the preceding claims, wherein the subdividing element (1) is attached to a casing tube (2), the subdividing element (1) and the casing tube (2) being casted together into the outer building wall (3) by the casting material capable of flowing first and hardening then, wherein, in at least a section of the through opening (4), the casing tube (2) is adjacent to the casting material and keeps free the through opening (4).

7. The use of claim 6, wherein the subdividing element (1) and the casing tube (2) are displaceable into different relative positions with respect to each other, such that a length of the through opening (4) kept free in the outer building wall (3) after the casting can be adjusted, wherein the length is adjusted prior to the casting by choosing one of the relative positions.

8. The use according to one of the preceding claims, wherein the subdividing element (1) comprises a flange plate (1b) at an end, the flange plate lying adjacent to a side face (12) of the outer building wall (3) after the casting, preferably on the outside of the building, and extending from the through opening (4) radially outwards.

9. The use according to one of the preceding claims, wherein the subdividing element (1) comprises a flange plate (1b) which extends radially outwards from the through opening (4) after the casting, wherein a thermal insulation (20) is arranged at the flange plate (1b), the subdividing element (1) and the thermal insulation (20) being casted together into the outer building wall (3) by the casting material capable of flowing first and hardening then, wherein the terminal insulation (20) is preferably arranged proximal to the inside (6) of the building with respect to the flange plate (1b).

10. The use according to one of the preceding claims, wherein the subdividing element (1) comprises a projection (25) extending at least section wise circumferentially around the longitudinal axis (10) of the through opening (4), the projection (25) projecting towards the outside (7) of the building after the structural integration, so that a thermal insulation panel (13) can be pushed against the projection (25) prior to the mounting to mark a region for removal which considers the through opening (4).

11. The use according to one of the preceding claims, wherein at least two of the branches electric, gas, water and telecommunication are led into the building with the building entry.

## Revendications

1. Utilisation d'une traversée de mur destinée à être intégrée dans un mur extérieur (3) d'un bâtiment pour l'introduction d'une pluralité de lignes dans ledit bâtiment,
laquelle traversée de mur présente un élément de subdivision (1) qui est structurellement intégré dans le mur extérieur de bâtiment (3) par scellement au moyen d'un matériau de scellement tout d'abord fluide puis solidifié, lequel élément de subdivision forme par la suite une pluralité d'ouvertures traversantes (8),
dans laquelle utilisation, en outre, après le scellement de l'élément de subdivision (1), une conduite (11) est appliquée à chacune des ouvertures traversantes (8) dudit élément pour ainsi prolonger chacune des ouvertures traversantes (8), puis au moins une desdites lignes est respectivement passée à travers au moins certaines desdites conduites (11),
lesdites conduites (11) consistant en des tuyaux de protection (15) qui s'étendent chacun extérieurement au bâtiment à partir de celui-ci après avoir été appliqués, par le côté extérieur de bâtiment (7), sur l'élément de subdivision (1),
ledit élément de subdivision (1), après le scellement, étant disposé dans une ouverture de passage (4) comprise entre un côté intérieur de bâtiment (6) et le côté extérieur de bâtiment (7) et délimitée par le matériau de scellement, et ledit élément de subdivision (1) subdivisant l'ouverture de passage (4) en ladite pluralité d'ouvertures traversantes (8) eu égard à des directions perpendiculaires à son axe longitudinal (10),
un joint individuel (30) respectif étant associé aux ouvertures traversantes (8) de l'élément de subdivision (1) vers le côté intérieur de bâtiment (6), lequel joint permet individuellement de combler ladite ouverture traversante (8) respective du côté intérieur de bâtiment (6) sous la forme d'une fermeture aveugle avant la mise en place de la ligne ou bien d'étancher ladite ouverture sur ce même côté après l'introduction de la ligne respective.

2. Utilisation selon la revendication 1, dans laquelle la traversée de mur présente, au niveau de l'élément de subdivision (1), une pluralité d'éléments d'étanchéité (18) réalisés dans un matériau d'étanchéité plus mou que celui de l'élément de subdivision, et au moins un des éléments d'étanchéité (18) est respectivement associé aux ouvertures traversantes (8), dans laquelle utilisation l'élément de subdivision (1) est ensuite scellé avec les éléments d'étanchéité (18) connexes puis chacune des conduites (11), après application à l'ouverture traversante (8) respective, est étanchée vis-à-vis de l'élément de subdivision (1) par l'au moins un élément d'étanchéité (18) respectif associé.

3. Utilisation selon la revendication 1 ou 2, dans laquelle, lors de l'application de la conduite (11) à chacune des ouvertures traversantes (8), celle-ci est emboîtée dans son ouverture traversante (8) respective.

4. Utilisation selon l'une des revendications précédentes, dans laquelle les joints individuels (30) peuvent être mis en place dans un siège de joint respectif par serrage d'une vis (31) respective et peuvent être retirés du siège de joint par desserrage de ladite vis (31), aux fins de quoi les vis (31) s'insèrent dans un filetage respectif constitué par l'élément de subdivision (1) luimême ou par une partie (32) prévue d'un seul tenant avec ce dernier, lesquels filetages sont déjà présents lorsque l'élément de subdivision (1) est structurellement intégré par scellement dans le mur extérieur de bâtiment (3).

5. Utilisation selon l'une des revendications précédentes, dans laquelle l'élément de subdivision (1) au moins consiste en une pièce moulée en béton polymère.

6. Utilisation selon l'une des revendications précédentes, dans laquelle l'élément de subdivision (1) est appliqué à un tube-fourreau (2), est scellé conjointement avec le tube-fourreau (2) au moyen d'un matériau de scellement tout d'abord fluide puis solidifié, et ils sont ensemble structurellement intégrés dans le mur extérieur de bâtiment (3), ledit tube-fourreau (2) étant contigu au matériau de scellement au moins en une section de l'ouverture de passage (4) et maintient dégagée ladite ouverture de passage (4).

7. Utilisation selon la revendication 6, dans laquelle l'élément de subdivision (1) et le tube-fourreau (2) sont déplaçables en diverses positions relatives l'un par rapport à l'autre de manière à permettre le réglage de la longueur de l'ouverture de passage (4) ensuite maintenue dégagée par celui-ci dans le mur extérieur de bâtiment (3), ladite longueur étant réglée avant le scellement grâce à la sélection d'une des positions relatives.

8. Utilisation selon l'une des revendications précédentes, dans laquelle l'élément de subdivision (1) présente, sur un côté terminal, une plaque formant collerette (1b) qui est contiguë à une surface latérale (12) du mur extérieur de bâtiment (3) après le scellement, de préférence sur le côté extérieur du bâtiment, et qui s'étend radialement vers l'extérieur à partir de l'ouverture de passage (4).

9. Utilisation selon l'une des revendications précédentes, dans laquelle l'élément de subdivision (1) présente une plaque formant collerette (1b) qui, après le scellement, s'étend radialement vers l'extérieur à partir de l'ouverture de passage (4), une isolation thermique (20) étant disposée au niveau de la plaque formant collerette (1b) dès le scellement, laquelle est scellée conjointement avec l'élément de subdivision (1) au moyen du matériau de scellement tout d'abord fluide puis solidifié et est structurellement intégrée avec celui-ci dans le mur extérieur de bâtiment (3), ladite isolation thermique (20) étant alors disposée par rapport à la plaque formant collerette (1b) de préférence à proximité du côté intérieur de bâtiment (6).

10. Utilisation selon l'une des revendications précédentes, dans laquelle l'élément de subdivision (1) présente un ressaut (25) périphérique qui fait saillie sur le côté extérieur de bâtiment (7) après l'intégration structurelle, et ce au moins par sections autour de l'axe longitudinal (10) de l'ouverture de passage (4), lequel ressaut permet d'effectuer un marquage, sur une plaque d'isolation thermique (13), par pression de celle-ci préalablement à son montage, d'une zone à détacher compte tenu de l'ouverture de passage (4).

11. Utilisation selon l'une des revendications précédentes, dans laquelle la traversée de mur permet le passage de lignes dans le bâtiment qui sont affectées à au moins deux transferts différents parmi celui de l'électricité, du gaz, de l'eau et des télécommunications.
